# EUROPEAN PATENT APPLICATION

(11) **EP 3 070 413 A1**
(43) Date of publication of application: **21.09.2016**
(21) Application number: 16160625.6
(22) Date of filing: 16.03.2016
(51) Int. Cl.: F24F 13/14, F24F 3/14, F24F 12/00, F24F 13/08, F24F 13/22, F24F 5/00, F24F 6/04

(54) **HEAT EXCHANGE DEVICE FOR AIR COOLING FOR CONDITIONING AND CLIMATE CONTROL SYSTEMS FOR SERVER ROOMS AND THE LIKE**

(30) Priority: 20.03.2015 IT PD20150063
(71) Applicant: Emerson Network Power S.R.L., 35028 Piove di Sacco (PD) (IT)
(72) Inventor: PAVANETTO, Riccardo, 31059 ZERO BRANCO TV (IT); MASETTO, Filippo, 35010 VILLANOVA DI CAMPOSAMPIERO PD (IT); PASTORE, Simone, 35020 MASERA' DI PADOVA PD (IT)
(74) Representative: Modiano, Micaela Nadia

(57) **Abstract**

A heat exchange device (10, 110) for air cooling for conditioning and climate control systems for server rooms and the like, comprising:
- an air cooling panel (11, 111),
- water dispensing means (12, 112), adapted to wet the cooling panel (11, 111) downward from above,
- means (13, 113) for collecting the water that descends from the cooling panel,
- a recirculation pump for the rise of the air cooling water from the collection means to the dispensing means arranged above the cooling panel (11, 111).

The water collection means (13, 113) comprise means (16, 116) for the controlled separation of a portion of waste water from the recirculation water collected by the collection means (13, 113).

## Description

The present invention relates to a heat exchange device for air cooling for conditioning and climate control systems for server rooms and the like.

Currently, conditioning and climate control systems for server rooms and for industrial environments in general, provided with evaporative means, therefore water-based means, for cooling an air flow that enters or exits from said system are known and are also disclosed and claimed in a plurality of patent applications by Emerson Network Power SRL, such as for example Italian patent application PD2013A190, EPA 15155733.7, EPA 15194029.3, EPA 15195887.3 and EPA 15199994.3.

These evaporative means comprise
- an air cooling panel, for example of the honeycomb type, with cells that are open in the air passage direction,
- water dispensing means adapted to wet said cooling panel downward from above,
- means for collecting the water that descends from the cooling panel, which are therefore arranged below the panel proper,
- a recirculation pump for the rise of the air cooling water from the collection means to the dispensing means arranged above the cooling panel.

The means for collecting the water that descends from the cooling panel are constituted by a collection, accumulation and pumping tank inside which the recirculation pump, or a plurality of recirculation pumps, is arranged.

In a different embodiment, the means for collecting water are constituted by a collection channel arranged below the cooling panel, which collects the water that descends from the cooling panel and from which the water descends further, by means of a connecting pipe, toward an accumulation and pumping tank in which the recirculation pump or the plurality of recirculation pumps is submerged.

The pump is of the submerged or submersible type.

These evaporative means indeed use the evaporative phenomenon, i.e., the characteristic of air of decreasing its temperature by absorbing water.

This event occurs at the cooling panel, which is crossed by the air upward from below, in countercurrent with respect to the water sprayed by the dispensing means.

The evaporation of the water at the cooling panel entails a decrease of the water flow-rate of the recirculation water flow of approximately 5-10% and a consequent degradation of the chemical characteristics of the water, such as a higher concentration of salts and an increase in pH.

In the case of a conditioning system of the evaporative free-cooling type, the parameter for evaluating the quality of the recirculation water is the conductivity of the water proper.

The recirculation water, in order to obviate its decrease, is topped up periodically by means of a hydraulic top-up line adapted to pour fresh water into the accumulation tank in which the recirculation pump is accommodated.

The opening and closing of this top-up line are actuated by one or more level sensors associated with corresponding switches designed to open a control valve of the hydraulic top-up line.

The top-up water is therefore mixed with the recirculation water.

This recirculation and top-up process continues until the conductivity of the recirculation in the accumulation tank, measured with a suitable conductivity meter proximate to the bottom of said accumulation tank, reaches an acceptability threshold value, beyond which the recirculation water is discharged completely from the tank and at the same time replaced with fresh water until the initial value of the conductivity of the water is restored.

This method for managing the evaporative means of the known type described above causes the discharge of the end-of-process water, i.e., with a threshold conductivity level, mixed with recirculation water that is still usable, with a consequent excess consumption and waste of the latter.

Moreover, this management method dictates that for a certain time interval the evaporative means operate with a reduced yield or do not operate at all, until the initial value of conductivity of the recirculation water is restored, to the full detriment of the yield of the conditioning system as a whole.

Moreover, currently the need to reduce the energy consumptions necessary in order to cool an air flow intended to pass through a conditioning system is felt increasingly.

In the case of a conditioning system of the adiabatic type, the collection means are of the type comprising a collection channel and an accumulation and pumping tank; the accumulation and pumping tank is provided with a float-controlled valve that controls the inflow of the water from a top-up line based on the level of the water in the accumulation and pumping tank.

The water contained therein is pumped to the water delivery means above the air cooling panel, the external air is forced to pass through the wet cooling panel and is indeed cooled.

The recirculation water, which has not evaporated during the air cooling process, is collected in the collection channel, connected hydraulically to the accumulation and pumping tank by means of a return circuit.

Therefore, the excess recirculation from the evaporative process for air cooling, returns into the pumping tank, where it is mixed with the top-up water and with the water that is already present in the accumulation and pumping tank, in order to be then pumped again toward the delivery means.

As the system operates, the concentration of the salts in the accumulation and pumping tank increases over time until it reaches values that are unacceptable for the correct operation of said evaporative air cooling means.

It is therefore necessary, in a manner similar to what has been described for a conditioning system of the evaporative type, to drain a certain quantity of water in order to stabilize the maximum concentration of the salts in the system to a value that is acceptable for correct operation.

This function is performed by means of a bleed-off line, i.e., a draining line, which mates on the line, downstream of the recirculation pump, directed to the delivery means, affecting part of the water pumped toward said delivery means.

The required flow-rate of water to be drained is a function of the evaporated water flow-rate, of the hardness, of the alkalinity and of the pH of the top-up water, and is calibrated by means of a manual valve arranged on the bleed-off line.

Unlike what has been described above for the evaporative cooling means of a conditioning system of the adiabatic type, the bleed-off is continuous and constant over time, i.e., not intermittent, and can be adjusted only manually by an operator at system start, based on the worst functional conditions, i.e., maximum evaporation, and based on the chemical parameters of the top-up water, and not based on the actual conductivity and/or concentration of salts in the accumulation and pumping tank as described above for the evaporative cooling means of a conditioning system of the adiabatic type.

Since the bleed-off is calibrated in the case of maximum evaporation, therefore with summer conditions, with lower quantities of evaporated water, for example in the mid-season, the bleed-off is in excess with respect to what is actually necessary, moreover with water draining from a point of the system that is not the one of maximum concentration, given that water with a higher saline concentration is heavier and tends to sink toward the bottom of the tank, while the drain water is affected on the line downstream of the recirculation pump.

Moreover, the withdrawal of the flush water from the line of the recirculation water directed to the delivery means entails that said drain water is pumped together with the recirculation water, with consequent waste of energy caused by the use of the pump in order to provide its expulsion from the system.

Periodically, the accumulation and pumping tank is discharged by means of a discharge line connected to the bottom of the accumulation and pumping tank proper, for the only reason of avoiding problems of a sanitary nature and not because particular levels of mineralization of the water have been reached.

During this step, an electronic control actuates the opening of a motorized two-way valve arranged on the discharge line.

The aim of the present invention is to provide a heat exchange device for air cooling for conditioning and climate control systems for server rooms and the like, that is capable of obviating the cited limitations of the air evaporative cooling means both for conditioning systems of the adiabatic type and for conditioning systems of the evaporative type.

Within this aim, an object of the invention is to provide a device that allows a lower consumption of water.

Another object of the invention is to provide a device that allows a lower consumption of electric power for draining the water with high saline content.

A further object of the invention is to provide a device that allows to keep under control the characteristics of the recirculation water.

This aim and these and other objects that will become better apparent hereinafter are achieved by a heat exchange device for air cooling for conditioning and climate control systems for server rooms and the like, comprising:
- an air cooling panel, for example of the honeycomb type, with cells that are open in the direction of the air passage,
- water dispensing means, adapted to wet said cooling panel downward from above,
- means for collecting the water that descends from the cooling panel, arranged therefore below said panel,
- a recirculation pump for the rise of the air cooling water from the collection means to the dispensing means arranged above the cooling panel,
characterized in that said water collection means comprise means for the controlled separation of a portion of waste water from the recirculation water collected by said collection means.

Further characteristics and advantages of the invention will become better apparent from the description of two preferred but not exclusive embodiments of the device according to the invention, illustrated by way of non-limiting example in the accompanying drawings, wherein:
Figure 1 is a diagram of a device according to the invention in a first embodiment thereof;
Figure 2 is a diagram of a device according to the invention in a second embodiment thereof;
Figure 3 is a schematic view of a constructive variation of a detail of the device shown schematically in Figure 2.

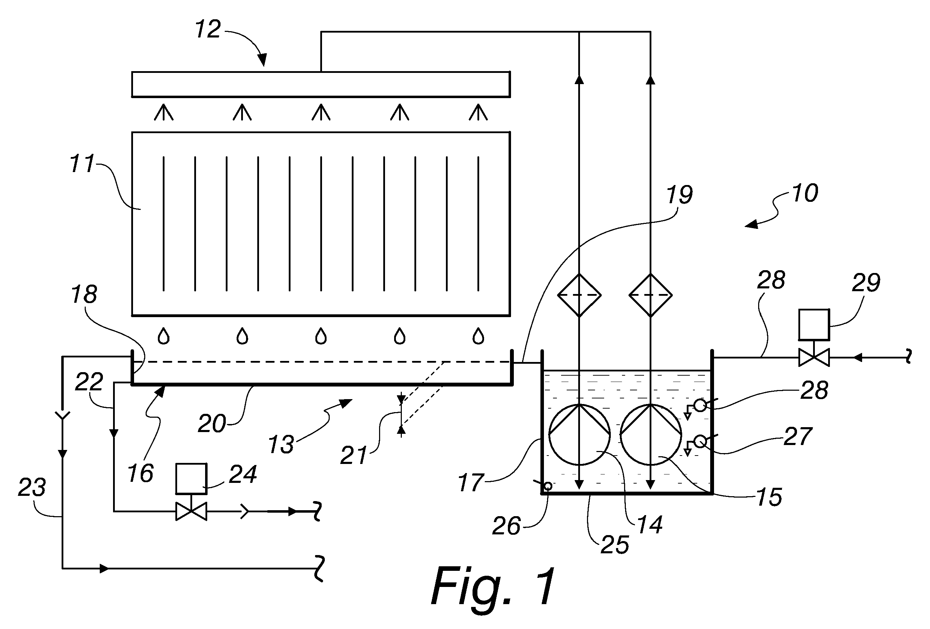

With reference to the figures, a heat exchange device for air cooling for conditioning and climate control systems for server rooms and the like is shown schematically in Figure 1 in a first embodiment thereof designed for free-cooling conditioning systems of the evaporative type; in Figure 1 the device according to the invention is designated by the numeral 10.

The device 10 comprises:
- an air cooling panel 11, for example of the honeycomb type, with cells that are open in the direction of the air passage,
- water dispensing means 12, adapted to wet the cooling panel 11 downward from above,

- means 13 for collecting the water that descends from the cooling panel 11, which are therefore arranged at least partially below the panel 11,
- a recirculation pump 14, or two recirculation pumps 14 and 15, for the rise of the cooling water from the collection means 13 to the dispensing means 12 arranged above the cooling panel 11.

The particularity of the invention resides in that the water collection means 13 comprise means 16 for the controlled separation of a portion of waste water from the recirculation water collected by the collection means 13.

In this first embodiment of the device 10 according to the invention, the collection means 13 are constituted by a first tank 17 for the recirculation water, i.e., the water that is reused for a subsequent heat exchange cycle on the cooling panel 11.

The recirculation pumps 14 and 15 are contained in the first tank 17.

The means 16 for the controlled separation of a portion of waste water from the recirculation water collected by the collection means 13 are constituted, in the present constructive example, by a second tank 18, which is arranged below the cooling panel 11 and is adapted to collect water that descends directly from the cooling panel 11; the second tank 18 is connected hydraulically to the first tank 17 by means of a connecting passage 19, which is arranged at a certain distance 21 from the bottom 20 of the second tank 18, which allows the transfer of the water by gravity or by falling.

The passage 19 can be constituted by a duct if the first tank 17 and the second tank 18 are at a certain distance, or by a spillover opening if the first tank 17 and the second tank 18 are adjacent.

The second tank 18 has a bottom 20.

The distance 21 from the bottom 20 of the passage 19 allows and determines an accumulation on the bottom of the second tank 18 of water with a higher saline concentration and therefore with a higher degree of conductivity, while the water that has a lower saline concentration and is therefore lighter and remains at the surface, descends into the first tank 17, in order to be returned into circulation by the recirculation pumps 14 and 15.

At the bottom 20 of the second tank 18 there is a connection to a discharge line 22, or bleed-off line, for the evacuation of the water with higher saline concentration that accumulates in the second tank 18.

The discharge line 22 has an opening-closing valve 24 with remote control, for example a motorized valve.

At the upper part of the second tank 18 there is a connection to an overflow line 23 adapted to prevent the excessive filling of the second tank 18 above the passage 19 for connection to the first tank 17.

The first tank 17 has, at its bottom 25, a conductivity meter 26 in order to detect the conductivity of the water intended to be sent back to the dispensing means 12, since the recirculation pumps 14 and 15 draw the recirculation water from the bottom of the first tank 17.

The second tank 18 has a lower volume than the first tank 17, allowing to reduce the volume of discharge water, i.e., the consumption of water, and as a consequence to reduce the volume, and therefore the cost and the space occupations, of the discharge hydraulic circuit.

A water top-up line 28 is connected to the first tank 17 and is designed to inject new recirculation water into the first tank 17 when the level of the water descends below a preset minimum level that makes the correct operation of the recirculation pumps problematic, disadvantageous or impossible.

On the top-up line 28 there is a remote-controlled opening-closing valve 29, for example a solenoid valve.

The first tank 17 has two switches, level sensors 27 and 30, designed to signal:
- a first sensor 27 to signal the lowering of the level of the recirculation water in the first tank 17, with consequent opening of the opening-closing valve 29 of the top-up line 28,
- a second sensor 30 to signal the top-up of the optimum level of the recirculation water in the first tank 17, with consequent closing of the opening-closing valve 29 of the top-up line 28.

If, therefore, the logic of operation for the evaporative air cooling means of the known type provides for loading the recirculation tank, the recirculation of the water until a threshold value of the conductivity read by the conductivity meter is reached, with consequent discharge and simultaneous top-up until the conditions of the water of the recirculation tank do not reach the optimum starting conditions, with the device 10 according to the invention allows to separate physically the so-called "end-of-process" water, with higher saline concentration, retained in the second tank 18, from the recirculation water redirected and collected in the first tank 17; in this manner a better use of the water is provided, since only the water with a higher saline concentration is discharged from the bottom of the second tank 18 instead of a mixture thereof with the recirculation water as in evaporative cooling means of the known type.

This, in practical terms, allows to discharge only water with high saline concentration and allows greater adjustment flexibility, since the discharge valve 24 allows to perform both an on-off adjustment and an adjustment with continuous modulation of the flow-rate of the discharged water.

The device 10 is, as a whole, more flexible than the similar known air cooling means of the evaporative type, and is adjustable depending on the working conditions and on the characteristics of the supply water.

Another advantage of the device 10 according to the invention resides in that the dimensions of the first tank 17, for recirculation, are smaller than the dimensions of known recirculation tanks, allowing a greater efficiency of all the devices installed that control and contrast the proliferation of bacteria.

A further advantage that is obtained with the device 10 according to the invention is containment of scaling on the exchanger, i.e., the decrease in performance because of the deposition of an insulating crust on the body of the exchanger, and the decrease in the risk of incurring in corrosion phenomena.

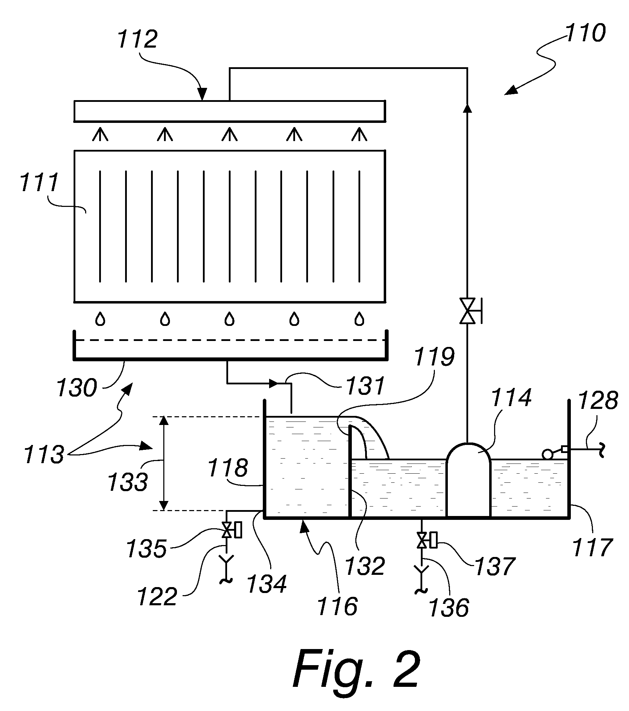

A heat exchange device for air cooling for conditioning and climate control systems for server rooms and the like is shown schematically in Figure 2 in a second embodiment thereof, designed for conditioning systems of the adiabatic type; in Figure 2 the device according to the invention is designated by the numeral 110.

The device 110 comprises, as already described above for the first embodiment:
- an air cooling panel 111, for example of the honeycomb type, with cells that are open in the direction of the air passage,
- water dispensing means 112, adapted to wet the cooling panel 111 downward from above and constituted for example by a tube with a series of aligned holes,
- means 113 for collecting the water that descends from the cooling panel 111, which are therefore arranged at least partially below the panel 111 proper,
- a recirculation pump 114 for the rise of the cooling water from the collection means 113 to the dispensing means 112 arranged above the cooling panel 111.

The water collection means 113 comprise means 116 for the controlled separation of a portion of wastewater from the recirculation water collected by said collection means 113.

In this second embodiment of the device 110 according to the invention, the collection means 113 are constituted by a first tank 117 for the recirculation water, i.e., the water that is reused for a subsequent heat exchange cycle on the cooling panel 111, and by a collection channel 130, which is connected hydraulically to the first accumulation and pumping tank 117 by means of a hydraulic return line 131.

The collection channel 130 is the part of the collection means 113 that is arranged directly below the cooling panel 111 in order to collect its descending water that has not evaporated.

The recirculation pump 114 is contained in the first tank 117.

The means 116 for the controlled separation of a portion of wastewater from the recirculation water collected by the collection means 113 are constituted by a second tank 118 connected hydraulically to the first tank 117 by means of a connecting passage 119 that allows the transfer of the water by gravity or by falling.

The passage 119 is constituted, in this second embodiment, by a spillover opening, in which the first tank 117 and the second tank 118 are, for example, adjacent.

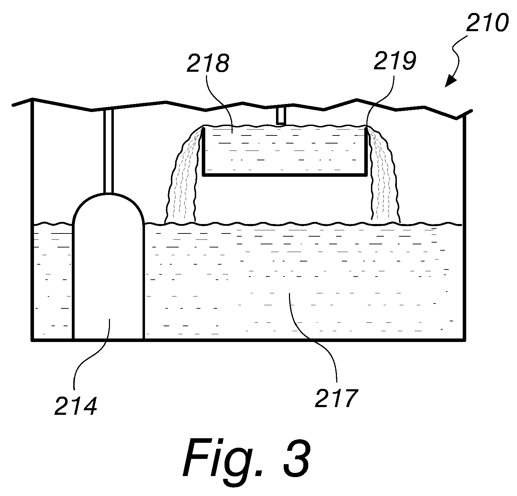

In a constructive variation of this second embodiment of the device, designated in Figure 3 by the numeral 210, the second tank 218 is provided above the first tank 217 and separately from it, and the passage, or passages, 219 that defines the spillover opening is part only of the second tank 218; the first tank 217 contains the recirculation pump 214.

The water that has not evaporated during descent on the cooling panel 111 is collected in the collection channel 130, from which it is conveyed by falling to the second tank 118 by means of the return line 131.

The first tank 117 and the second tank 118 are divided by a partition 132, at the upper edge of which the spillover passage 119 is defined.

In the second tank 118, the level of the water rises above the edge of the partition 132, thus forming the spillover toward the first tank 117, where the return water from the collection channel 130 and from the second tank 118 is mixed with the recirculation water already present therein and with top-up water that arrives from a top-up line 128.

The water inside the second tank 118 has a higher saline concentration than that of the first tank 117.

In order to perform the discharge of the water with a higher saline concentration, the most convenient point is therefore the bottom of the second tank 118.

This discharge of the water with a higher saline concentration is performed by draining by falling the water from the second tank 118 by means of a discharge line 122, taking advantage of the fact that the head 133 that forms between the level of the hydraulic connection 134 between the second tank 118 and the discharge line 122, and the level of the water accumulated at the spillover passage 119 is substantially constant in all operating conditions and for any flow-rate of the discharge line 122. The draining is continuous and does not entail the emptying, not even partial, of the second tank 118, since the quantity of water that returns from the cooling panel 111, the quantity of water that pours into the first tank 117 and the quantity of water discharged by means of the discharge line 122 are in equilibrium.

The exact flow-rate that must exit from the discharge line 122 is defined by adjusting manually a valve 135.

Discharge is continuous and constant over time, i.e., not intermittent, and is adjustable only manually by the operator present at the moment of the starting of the system of which the device 110 is a part, based on the worst operating conditions, i.e., of maximum evaporation, and of the chemical parameters of the top-up water, and not on the actual conductivity and/or concentration of salts present in the tanks.

Since the discharge is calibrated in the case of maximum evaporation, therefore with summer conditions, with lower quantities of evaporated water, for example in the mid-season, the quantity of water discharged with the evaporative cooling means of the known type is greater than actually needed; thanks to the device 110 according to the invention the quantity of water discharged is lower, since the discharged water is drawn only from the second tank 18 and from the bottom thereof, therefore only water with a high saline concentration is discharged, while the water with acceptable saline concentration is poured into the first recirculation tank 117.

Periodically, the first tank 117 is discharged along a corresponding discharge line 136, for the only reason of avoiding sanitary problems and not to check the mineralization of the water in the first tank 117.

During this step, an electronic control and management unit of the device according to the invention actuates the opening of a valve 137 arranged on the discharge line 136, for example a motorized two-way valve.

With this second embodiment of the device 110 according to the invention one obtains important advantages such as:
- a reduction in water consumption for the discharge of the water with high saline concentration, with respect to currently known evaporative cooling means provided with a single collection tank,
- the use of cooling panels that could not be used, in theory, with recirculation water, since the water used for recirculation is kept stably at a low and controlled saline concentration,
- the possibility to reduce the flow-rate of recirculation water to be pumped, since it is necessary only to supply the cooling panel and not also pump water toward a discharge line coupled downstream of the pumps, as in the background art, with corresponding improvement of the energy efficiency of the system as a whole;
- a reduction of the dirt circulating in the connection ducts between the several parts of the device according to the invention, since dirt tends to settle on the bottom of the second tank 118 in order to be discharged instead of being pumped by the pump that draws the water from the bottom of the first tank 117,
- greater simplicity of calibration of the discharge flow-rate and of the pumping flow-rate.

In practice it has been found that the invention achieves the intended aim and objects.

In particular, the invention has provided a device that allows lower water consumption.

Moreover, the invention has provided a device that allows a lower consumption of electric power for the draining of the water with high saline content, since the pumps present in the first tank are not used for this discharge operation.

Moreover, the invention has provided a device that allows to keep easily under control the characteristics of the recirculation water, both by means of suitable instruments, such as a conductivity meter, and without these instruments.

The invention thus conceived is susceptible of numerous modifications and variations, all of which are within the scope of the appended claims; all the details may further be replaced with other technically equivalent elements.

In practice, the materials and components used, so long as they are compatible with the specific use, as well as the contingent shapes and dimensions, may be any according to requirements and to the state of the art.

The disclosures in Italian Patent Application No. PD2015A000063 (102015902339680) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A heat exchange device (10, 110) for air cooling for conditioning and climate control systems for server rooms and the like, comprising:
- an air cooling panel (11, 111),
- water dispensing means (12, 112), adapted to wet said cooling panel (11, 111) downward from above,
- means (13, 113) for collecting the water that descends from the cooling panel,
- a recirculation pump for the rise of the air cooling water from the collection means to the dispensing means arranged above the cooling panel (11, 111),
**characterized in that** said water collection means (13, 113) comprise means (16, 116) for the controlled separation of a portion of waste water from the recirculation water collected by said collection means (13, 113).

2. The device according to claim 1, **characterized in that** the collection means (13) are constituted by a first tank (17) for the recirculation water, i.e., the water that is reused for a subsequent heat exchange cycle on the cooling panel (11), recirculation pumps (14, 15) being contained within said first tank (17).

3. The device according to one or more of the preceding claims, **characterized in that** said means (16) for the controlled separation of a portion of waste water from the recirculation water collected by said collection means (13) are constituted by a second tank (18), which is arranged below the cooling panel (11) and is adapted to collect water that descends directly from the cooling panel (11), said second tank (18) being connected hydraulically to the first tank (17) by means of a connecting passage (19), which allows the transfer of the water toward said first tank (17) by gravity or by falling.

4. The device according to one or more of the preceding claims, **characterized in that** said passage (19) is constituted by a duct.

5. The device according to one or more of the preceding claims, **characterized in that** said passage (19) is arranged at a certain distance (21) from the bottom (20) of the second tank (18), said distance (21) from the bottom of the passage (19) allowing and determining an accumulation, on the bottom of the second tank (18), of water with a higher saline concentration and therefore with a higher degree of conductivity, the water with a lower saline concentration remaining at the surface and descending into the first tank (17).

6. The device according to one or more of the preceding claims, **characterized in that** said second tank (18) has a bottom (20), at said bottom (20) of the second tank (18) there being a connection to a discharge line (22) or bleed-off line, for the evacuation of the water at higher saline concentration that accumulates in the second tank (18).

7. The device according to one or more of the preceding claims, **characterized in that** said discharge line (22) has an opening-closing valve (24) with remote control.

8. The device according to one or more of the preceding claims, **characterized in that** said first tank (17) has, at its bottom (25), a conductivity meter (26) in order to detect the conductivity of the water preset to be sent back to the dispensing means (12).

9. The device according to claim 1, **characterized in that** said collection means (113) are constituted by a first tank (117) for the recirculation water and by a collection channel (130), which is connected hydraulically to the first accumulation and pumping tank (117) by means of a hydraulic return line (131), said collection channel (130) being the part of the collection means (113) that is arranged directly below the cooling panel (111) in order to collect from it the descending water that has not evaporated, the recirculation pump (114) being contained in said first tank (117).

10. The device according to claim 9, **characterized in that** said means (116) for the controlled separation of a portion of waste water from the recirculation water collected by said collection means (113) are constituted by a second tank (118) that is connected hydraulically to the first tank (117) by means of a connecting passage (119) that allows the transfer of the water by gravity or by falling, said passage (119) being constituted by a spillway.
